# EUROPÄISCHE PATENTSCHRIFT

(11) **EP 2 474 256 B1**
(45) Veröffentlichungstag und Bekanntmachung des Hinweises auf die Patenterteilung: **13.11.2013**
(21) Anmeldenummer: 11450157.0
(22) Anmeldetag: 23.12.2011
(51) Int. Cl.: A47J 42/10

(54) **Gewürzmühle mit einem Mahlwerk**
Spice mill with a grinder
Moulin à épices doté d'un broyeur

(30) Priorität: 11.01.2011 AT 282011
(43) Veröffentlichungstag der Anmeldung: 11.07.2012
(73) Patentinhaber: Joma Kunststofftechnik GmbH & Co. KG, 2345 Brunn am Gebirge (AT)
(72) Erfinder: Petri, Ovidiu, 2362 Biedermannsdorf (AT)
(74) Vertreter: Rippel, Andreas

(56) Entgegenhaltungen:
- EP-A1- 0 986 984
- EP-A1- 2 050 377
- EP-A2- 0 282 259
- DE-C- 160 023
- DE-C- 849 600
- DE-U1- 29 921 402

## Beschreibung

Die Erfindung bezieht sich auf eine Gewürzmühle mit einem Mahlwerk, das einen mit Zähnen versehenen Stator aufweist, in dem ein mit Zähnen versehener Rotor gelagert ist, der über eine fest mit ihm verbundene Kappe drehbar ist und in der, der Durchgang des Mahlgutes durch das Mahlwerk in zwei Kammern unterteilt ist, wobei in der in Durchgangsrichtung ersten Kammer der Rotor nur wenige flügelartige Zähne aufweist, wobei ferner die Zähne des Stators in der in Durchgangsrichtung zweiten Kammer konisch nach außen verlaufen und die Zähne des Rotors einschließlich der flügelartigen Zähne in der ersten Kammer gegenüber der Längsachse des Rotors schräg verlaufen. Insbesondere ist Gegenstand der Erfindung eine Gewürzmühle, deren Mahlwerk auf ein Glas aufgesetzt ist, das die zu mahlenden Gewürze aufnimmt.

Es sind schon eine Vielzahl von Gewürzmühlen auf dem Markt, die alle den Nachteil haben, dass weiche Gewürze, wie z.B. Chili, nur unvollständig gemahlen werden. Versuche haben gezeigt, dass bei derzeit am Markt verfügbaren Gewürzmühlen zwischen 2 g und 6 g Restmenge im Gewürzglas verbleiben.

In der DE 160 023 C ist ein Mahlwerk für Kaffee- und dgl. Mühlen beschrieben, das im Wesentlichen die eingangs beschriebenen Merkmale aufweist. Um den vorerst grob gemahlenen Kaffee zu feinem Pulver zu zerschneiden ist eine zusätzliche Schneidscheibe mit Schneidzähnen angeordnet.

Die Erfindung hat es sich zum Ziel gesetzt, eine Gewürzmühle der eingangs genannten Art zu schaffen, mit der auch weiche Gewürze im Wesentlichen vollständig zerkleinert und aus dem Behälter ausgetragen werden, wobei keine zusätzlichen Organe notwendig sind.

Erreicht wird dies dadurch, dass zum Schneiden des vorgemahlenen Mahlgutes in der zweiten Kammer die Zähne des Rotors scharfkantig sind, d.h., dass deren Schneidkanten einen maximalen Abrundungsradius von 0,1mm aufweisen.

Bei einer erfindungsgemäß ausgebildeten Gewürzmühle wird in der ersten Kammer das Mahlgut, z.B. Chili, vorgemahlen und in die zweite Kammer weiter gefördert. In der zweiten Kammer wird das vorgemahlene Mahlgut geschnitten und aus der Kammer heraus gefördert. Die erfindungsgemäße Ausbildung der Zähne ermöglicht dabei die im Wesentlichen vollständige Zerkleinerung auch weicher Gewürze.

Nachstehend ist die Erfindung anhand eines in den Zeichnungen dargestellten Ausführungsbeispieles näher beschrieben. Dabei zeigt:
- Fig. 1: eine auf den Behälterhals eines Behälters aufgesetzte erfindungsgemäße Gewürzmühle im Schnitt;
- Fig. 2: den Stator des Mahlwerkes im Längsschnitt gemäß der Linie A-A in Fig. 4;
- Fig. 3: den Stator in schaubildlicher Ansicht;
- Fig. 4: den Stator im Querschnitt;
- Fig. 5: eine Draufsicht auf den Rotor des erfindungsgemäßen Mahlwerkes;
- Fig. 6: eine Ansicht des Rotors;
- Fig. 7: eine schaubildliche Ansicht des Rotors.

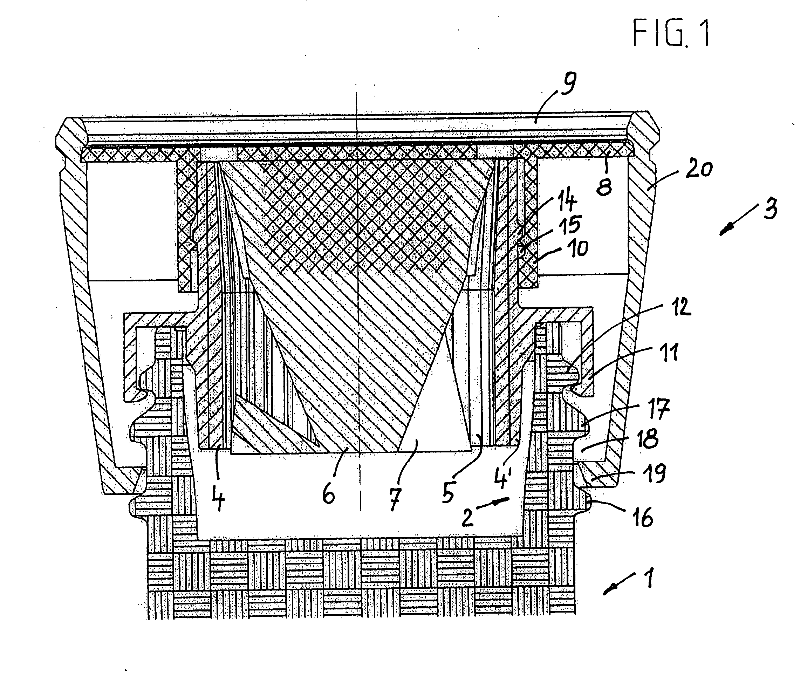

Gemäß Fig. 1 ist auf dem Behälterhals 2 eines Behälters 1, insbesondere einer Flasche, ein Mahlwerk 3 aufgesetzt. Das Mahlwerk 3 besteht aus einem Stator 4 mit nach innen ragenden Zähnen 5 und einem im Stator 4 gelagerten Rotor 6 mit Zähnen 7, die mit den Zähnen 5 des Stators 4 zum Mahlen eines im Behälter 1 enthaltenen Gewürzes zusammenwirken.

Der Rotor 6 ist mit einem Innenteil 8 und dieser mit einer Kappe 9 fest verbunden. Der mit der Kappe 9 verbundene Innenteil 8 weist einen den Rotor 6 mindestens teilweise umgebenden Ring 10 auf.

Der Stator 4 weist einen fest mit ihm verbundenen Außenteil 4' auf und dieser besitzt nach innen federnde Krallen 11, die eine am Behälterhals 2 nahe seinem oberen Ende umfänglich verlaufende Rippe 12 umgreifen, wodurch der Stator 4 fest am Behälterhals 2 befestigt ist.

Der Rotor 6 weist eine an seinem Umfang angeordnete Rippe 14 auf, die mit einer innen am Ring 10 umfänglich verlaufenden Nut 15 zusammenwirkt.

Der Behälterhals 2 besitzt an seinem Außenumfang zwei umfänglich verlaufende Rippen 16 und 17, die eine Rille 18 begrenzen. In diese Rille 18 greifen Ansätze 19 ein, welche am Umfangsteil 20 der Kappe 9 angeordnet sind.

Diese Ansätze 19 begrenzen daher, insbesondere durch die Rippe 17, eine axiale Bewegung der Kappe 9 und damit des Rotors 6.

Demgemäß ist bei der in Fig. 1 dargestellten Lage des Rotors 6 ein größerer Mahlspalt zwischen dem Stator 4 und dem Rotor 6 vorhanden. Im Gegensatz dazu ist bei einer Stellung, in der die Rippe 14 in die Nut 15 eingreift, der Mahlspalt zwischen dem Stator 4 und dem Rotor 6 kleiner.

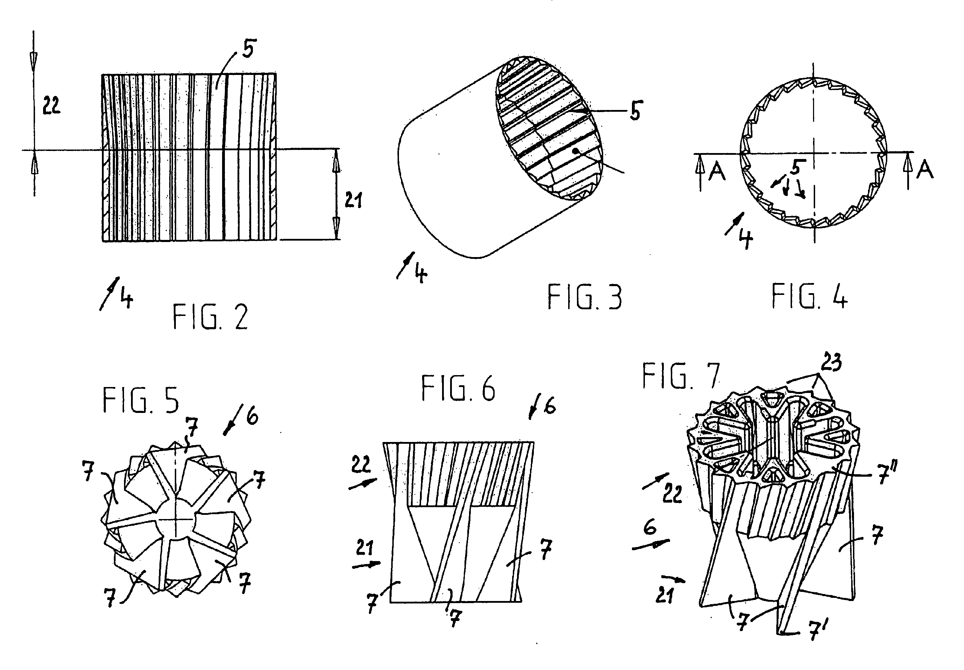

Aus Fig. 2 ist ersichtlich, dass der Stator 4 zwei Bereiche aufweist, nämlich den der Kammer 21 und den der Kammer 22. Im Bereich der Kammer 22 verlaufen die Zähne 5 konisch nach außen.

Der in den Fig. 5, 6 und 7 gesondert dargestellte Rotor 6 weist ebenfalls zwei Bereiche auf, die den Kammern 21 und 22 entsprechen. In jenem Bereich, welcher der Kammer 21 entspricht, besitzt der Rotor 6 im Vergleich zur Kammer 22 nur wenige flügelartige Zähne 7. Die nach dem Zusammenbau im Bereich der Kammer 22 befindlichen Zähne 23 sind wesentlich mehr als die Anzahl der flügelartigen Zähne 7. Sowohl die Zähne 23 als auch die flügelartigen Zähne 7 verlaufen gegenüber der Längsachse des Rotors 6 schräg, wobei die flügelartigen Zähne 7 schräg nach innen und die Zähne 23 schräg nach außen verlaufen. Die Schrägstellung beträgt zwischen 20° und 35°.

Auch sind sowohl die Zähne 23 als auch die Zähne 7 scharfkantig, wobei unter "scharfkantig" verstanden wird, dass die Schneidkanten einen maximalen Abrundungsradius von 0,1 mm aufweisen.

Aus Fig. 7 ist ersichtlich, dass sich der Querschnitt der Flügel 7 von viereckig bei 7' zu dreieckig bei 7" ändert.

Wird demnach der Behälter 1 gegenüber der Stellung nach Fig. 1 um 180° verschwenkt, gelangt das Mahlgut vorerst in die Kammer 21 und wird dort vorgemahlen, soferne der Rotor 6 über die Kappe 9 verdreht wird. Bei weiterer Drehung des Rotors 6 wird das Mahlgut von der Kammer 21 in die Kammer 22 befördert, dort geschnitten und aus der Kammer 22 heraus gefördert.

## Patentansprüche

1. Gewürzmühle mit einem Mahlwerk, das einen mit Zähnen (5) versehenen Stator (4) aufweist, in dem ein mit Zähnen (7, 23) versehener Rotor (6) gelagert ist, der über eine fest mit ihm verbundene Kappe (9) drehbar ist und in der der Durchgang des Mahlgutes durch das Mahlwerk in zwei Kammern (21, 22) unterteilt ist, wobei in der in Durchgangsrichtung ersten Kammer (21) der Rotor (6) nur wenige flügelartige Zähne (7) aufweist, wobei ferner die Zähne (5) des Stators (4) in der in Durchgangsrichtung zweiten Kammer (22) konisch nach außen verlaufen und die Zähne des Rotors (6) einschließlich der flügelartigen Zähne (7) in der ersten Kammer (21) gegenüber der Längsachse des Rotors (6) schräg verlaufen, **dadurch gekennzeichnet, dass** zum Schneiden des vorgemahlenen Mahlgutes in der zweiten Kammer (22) die Zähne (7,23) des Rotors (6) scharfkantig sind, d.h., dass deren Schneidkanten einen maximalen Abrundungsradius von 0,1mm aufweisen.

## Claims

1. A spice mill with a grinder, which comprises a stator (4) provided with teeth (5), in which stator a rotor (6) provided with teeth (7, 23) is mounted, which is rotatable via a cap (9) connected fixedly thereto and in which the passage of the grinding stock through the grinder is split up into two chambers (21, 22), wherein the rotor (6) comprises only a few blade-like teeth (7) in the - in the passage direction - first chamber (21), wherein furthermore the teeth (5) of the stator (4) in the - in the passage direction - second chamber (22) run conically outwards and the teeth of the rotor (6) including the blade-like teeth (7) in the first chamber (21) run obliquely with respect to the longitudinal axis of the rotor (6), **characterised in that**, in order to cut the pre-ground grinding stock in the second chamber (22), the teeth (7, 23) of the rotor (6) are sharp-edged, i.e. their cutting edges have a maximum radius of curvature of 0.1 mm.

## Revendications

1. Moulin à épices comprenant un broyeur qui présente un stator (4) doté de dents (5), dans lequel est disposé un rotor (6) doté de dents (7, 23), lequel peut tourner via un couvercle (9) relié fixement à celui-ci et dans lequel le passage de la marchandise à broyer à travers le broyeur est divisé en deux chambres (21, 22), sachant que dans la première chambre (21) du rotor (6) dans le sens de passage, le rotor (6) ne présente que quelques dents de type ailettes (7), sachant qu'en outre les dents (5) du stator (4) dans la deuxième chambre (22) dans le sens de passage sont coniques vers l'extérieur et les dents du rotor (6) y compris les dents de type ailettes (7) dans la première chambre (21) sont en biais par rapport à l'axe longitudinal du rotor (6), **caractérisé en ce que** pour couper la marchandise à broyer pré-broyée dans la deuxième chambre (22), les dents (7, 23) du rotor (6) sont à arête vive, c'est-à-dire que leurs arêtes de coupe présentent un rayon d'arrondi maximal de 0,1 mm.
